# EUROPEAN PATENT APPLICATION

(11) **EP 3 572 311 A1**
(43) Date of publication of application: **27.11.2019**
(21) Application number: 18741219.2
(22) Date of filing: 18.01.2018
(51) Int. Cl.: B62J 6/00

(54) **SIGNALLING SYSTEM INTEGRATED INTO BICYCLE SADDLES**

(30) Priority: 20.01.2017 ES 201730068
(71) Applicant: Fernandez Martinez de la Hidalga, David, 01005 Vitoria (Alava) (ES)
(72) Inventor: Fernandez Martinez de la Hidalga, David, 01005 Vitoria (Alava) (ES)
(74) Representative: Urizar Barandiaran, Miguel Angel
(86) International application number: PCT/ES2018/070038
(87) International publication number: WO 2018/134463

(57) **Abstract**

The invention relates to a signalling system that is integrated, without projecting, underneath a bicycle saddles (S). The system includes a signalling module (1) attached by means of rapid securing (2) and having a fixed-light emitter (11) centred in the rear area thereof, and a luminous indicator support (3) attached without interfering visually with the fixed-light emitter (11) and having at least one fixed signalling light (31) that covers from the side to the rear part of the saddle (S). Additionally, the signalling module (1) contains an intense-light emitter (11'), in which case the signalling module (1) includes programmed electronic components that autonomously activate the system upon braking, the luminous indicator support (3) contains two intermittent-light guides or points (32) visually accompanying the fixed-light emitter (11) and/or the fixed signalling light (31), in which case the system has a remote (M) with a control device that activates same.

## Description

### Object of the invention

The object of the invention relates to a signalling system fastened on a bicycle saddle, which is presented as a fully integrated unit.

### Background of the invention

In the current state of the art, devices attached to bicycles for the purpose of equipping them with signalling devices (optical or acoustic) are already known. In, for example and among others, files ES0372919 (in an old technology) and ES1145483, ES1114380, ES1119205, ES1147519 (in a more recent technology) some of them appear described.

### Technical problem to be resolved

The current/known devices are "added" to the structuring itself or fastened to one of the bicycle components with respect to which they project considerably, to the detriment of aerodynamics and with the resulting risk of breakage or deterioration.

Currently, cyclists are obliged to use their arms to indicate el change in travelling direction or changing of lanes. This is one of the most obvious risk factors in many bicycle accidents that occur on urban or interurban roads, as signals with arms are not noticed by the drivers of other vehicles, especially in conditions with low environmental luminosity which is a risk to road safety.

### Description of the invention

The object of the invention is a signalling system that is integrated into the bicycle saddle without projecting from it, in such a manner that enables signalling that provides additional safety to the user without the disadvantages (aerodynamic and all types) involved in carrying additional elements projecting with regard to the bicycle saddle and frame.

For the purposes of the invention, it is irrelevant if the resulting signalling is luminous/optical and/or audio/acoustic.

It also makes no difference if the vehicle on which it is applied is a bicycle or a motorcycle. In general, the system which is the object of the invention is applicable to any light vehicle (whether or not it carries standard optical and/or acoustic signalling devices, whether as additional elements or supplementary to the same).

The signalling system which is the object of the invention is characterized in that it includes:
- a signalling module integrated under the saddle of the bicycle and fastened to it so that it is detachable by interposition of rapid anchoring. The signalling module contains, at least, one fixed-light emitter centred in the rear area thereof.
- a luminous indicator support located on the rear part of the saddle and fastened to it so that it is detachable without interfering visually with the fixed-light emitter of the signalling module. This luminous indicator support has at least one signalling light that extends from the sides to the rear part of the saddle, which gives the invention visibility of the unit of up to approximately 270 degrees from the back side parts to the rear part of the bicycle.

The combination of the saddle with the connectable luminous elements is presented as an integrated unit so that it is almost imperceptible in case of the signalling system not being activated.

From this basic structuring, any variations that do not essentially alter, change or modify the proposal are included in the object of the invention.

Also included in the object of the invention are any more complex embodiments that come from this basic structuring and in particular, an embodiment in which:
- the luminous indicator support contains, as a minimum, two fixed signal lights visually accompanying the fixed-light emitter of the signalling module;
- the luminous indicator support contains two intermittent-light points or guides visually accompanying the fixed-light emitter of the signalling module and/or its fixed signalling lights; in which case a remote control device dedicated to activating each of the intermittent-light points or guides at the user's will is located in a remote control prepared, for example, in the tube of the handlebar..
- the signalling module contains an intense light emitter that activates autonomously; and that this intense light emitter is integrated or adjacent to the fixed-light emitter.
- the signalling module and the rapid anchoring are integrated in a single piece.

Other configurations and advantages of the invention can be deduced from the following description, and from the subsidiary claims.

### Description of the drawings

To better understand the object of the invention, a preferential form of embodiment is represented in the attached figures, subject to accessory changes that do not essentially alter it. In this case:
Figure 1 represents a general diagram of the signalling system that is the object of the invention with its basic components in arrangement of assembly with respect to the saddle (S) and the frame (B) of a bicycle, for a basic configuration that includes signalling module (1), rapid anchoring (2) and luminous indicator support (3).
Figure 2 represents a general schematic view of the signalling module (1) with the rapid anchoring (2) incorporated into its casing (12).
Figure 3a represents a general rear elevated view of the system which is the object of the invention integrated into the saddle (S) of a bicycle.
Figure 3b represents a view in lower perspective, with the component parts in assembly arrangement.
Figure 4 represents a general schematic plan view of the luminous indicator support (3) for a configuration that includes two fixed signalling lights (31); having also represented the corresponding signalling module (1) in operating configuration.
Figure 5 represents a general schematic plan view similar to figure 4 for a configuration that includes, additionally, two intermittent-light points or guides (32).
Figure 6 represents a general diagram of the remote (M) for an example of embodiment: arranged on the handlebar and with two push-buttons (M1), (M2) to activate one or the other of the intermittent-light points or guides (32) at the user's will.

### Detailed description of a preferential embodiment

Described below is an example of practical, non-limiting embodiment of this invention. Other modes of embodiment in which accessory changes are introduced that do not essentially alter it are in no way ruled out.

In accordance with the invention, the advocated signalling system is integrated into bicycle saddles (S) and consists of at least
- one signalling module (1) integrated under the bicycle saddle (S) and fastened to it so that it is detachable by interposition of rapid anchoring (2);
- a luminous indicator support (3) also fastened so that it is detachable on the bicycle saddle (S).

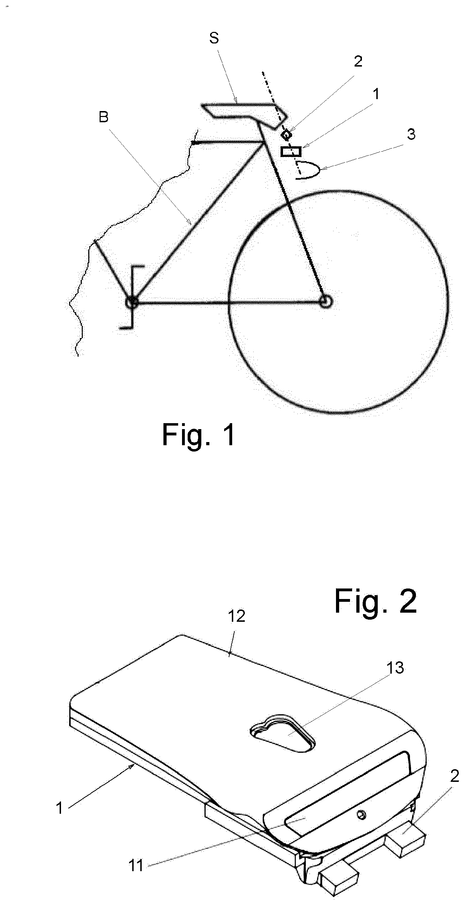

The signalling module (1) contains at least one fixed-light emitter (11) and an activation button (13). See figure 2

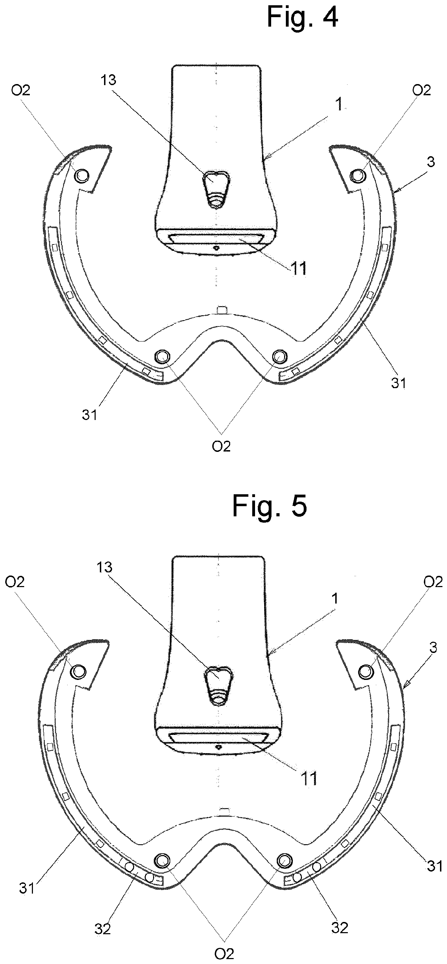

The luminous indicator support (3) contains at least two fixed signalling lights (31). See figure 4

According to the embodiment represented, the signalling module (1) carries the fixed-light emitter (11) centred in its rear area, the activation button (13) incorporated into its casing (12) and the rapid anchoring (2) incorporated in position on the fixed-light emitter (11). See figure 2.

It makes no difference, and it is included in the object of the invention, that there is more than one fixed-light emitter (11) in the rear area of the signalling module (1); and/or that the activation button (13) is placed on any other zone of the casing (12).

It also makes no difference, and it is included in the object of the invention, that the casing (12) of the signalling module (1) carries attached or detachable to the rapid anchoring (2); and even that the casing (12) of the signalling module (1) and the rapid anchoring (2) are integrated in a single piece.

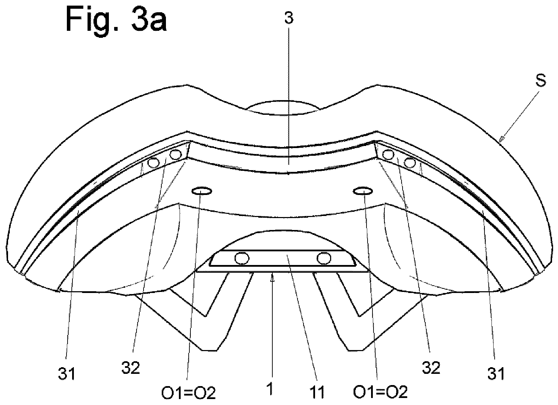

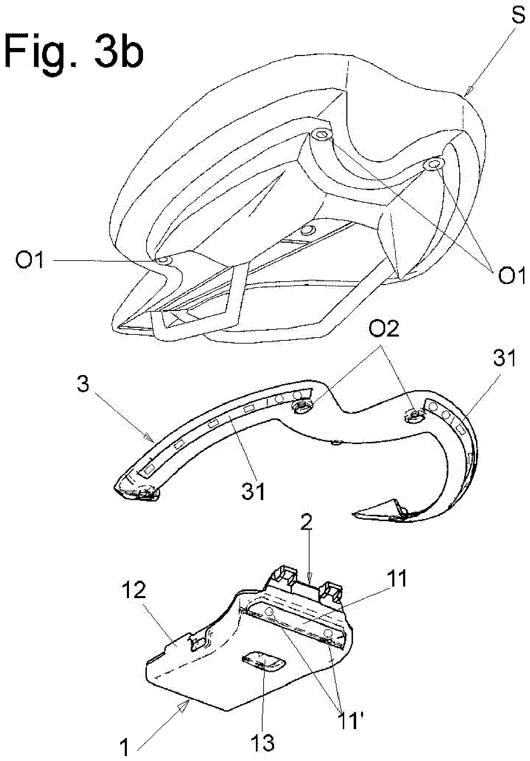

According to the embodiment represented in figures 3a and 3b, the luminous indicator support (3) is integrated under the bicycle saddle (S) without interfering visually with the fixed-light emitter (11) of the signalling module (1). The two fixed-signalling lights (31) of the luminous indicator support (3) are placed accompanying visually the fixed-light emitter (11) of the signalling module (1).

The luminous indicator support (3) is mounted under the saddle (S), for example, using screws housed in corresponding orifices (01), (O2), one of the saddle (S) and another of the luminous indicator support (3), facing each other in pairs.

It is irrelevant for the purposes of the invention that the indicator module (1) and the luminous indicators support (3) are fastened on the saddle (S) independently or in a solidary/ joint manner.

From this basic structuring, more complex embodiments are included in the object of the invention.

According to the embodiment represented in figure 4, the luminous indicator support (3) contains two fixed signalling lights (31) structured in two guides of elongated configuration that extend, occupying from the sides to the rear part of the saddle (S), which gives the invention visibility of the unit of up to approximately 270 degrees from the back side parts to the rear part of the saddle(S).

According to the embodiment represented in figure 5, the luminous indicator support (3) also contains two intermittent-light points or guides (32) visually accompanying the fixed-light emitter (11) of the signalling module (1) and/or its fixed signalling lights (31). There is a remote (M) for remote control of said intermittent-light points or guides (32). The remote (M) contains a remote-control device that activates the intermittent-light points or guides (32) of the luminous indicator support (3) when activated from said remote (M) at the user's will.

In these examples of embodiment, the luminous support indicator (3) is fastened under the saddle (S) using, for example, screws lodged in corresponding orifices (01), (O2) opposite each other in pairs.

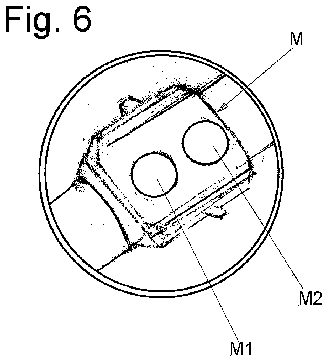

For the example of embodiment represented (see figure 6) said remote control (M) is placed on the bicycle handlebar and has two push-buttons (M1), (M2) that, at the user's will, activate respectively the left and right intermittent-light points or guides (32). The remote control is simply an electronic circuit containing the aforementioned left/right push-buttons (M1), (M2).

It is irrelevant for the purposes of the invention that the remote control can contain additional buttons for other functions that the device may have, and/or the type of connection that exists between said remote control device and the intermittent-light points or guides (32).

It is also irrelevant for the purposes of the invention that the device can connect and/or link to other devices to exchange data and/or expand functions.

Additionally, the signalling module (1) contains an intense light emitter (11') integrated or adjacent to the fixed-light emitter (11), that acts as a "brake light": on slowing down, the light intensifies autonomously, due to the electronic components programmed to exercise this function.

It is irrelevant for the purposes of the invention that the intense light emitter (11') is integrated or adjacent to the fixed-light emitter (11).

The materials, dimensions, proportions and, in general, those other accessory or secondary details that do not essentially alter, change or modify the proposal can be variable.

The terms in which this report is drafted are a true and accurate reflection of the object described, and must be taken in their broadest sense and never in a limited way.

## Claims

1. Signalling system integrated into bicycle saddles, **characterized in that**, under the bicycle saddle (S) and not projecting with respect to same, it includes:
a) a signalling module (1), fastened to the saddle (S) so that it is detachable by interposition of rapid anchoring (2) and that contains at least one fixed-light emitter, (11) centred in the rear area thereof;
b) a luminous indicator support (3), fastened to the saddle (S) so that it is detachable without interfering visually with the fixed-light emitter (11) of the signalling module (1) and that contains at least one fixed signalling light (31) that extends from the sides to the rear part visually accompanying the fixed-light emitter (11) of the signalling module (1).

2. Signalling system, according to claim 1, **characterized in that** the signalling module (1) and the luminous indicator support (3) are fastened on the saddle (S) independently.

3. Signalling system, according to claim 1, **characterized in that** the signalling module (1) and the luminous indicator support (3) are fastened on the saddle (S) and joined together.

4. Signalling system, according to claim 1, **characterized in that** the luminous indicator support (3) contains two fixed signalling lights (31) that extend from both sides to the rear part providing visibility of up to approximately 270 degrees.

5. Signalling system, according to claim 4, **characterized in that** the luminous indicator support (3) contains two intermittent-light points or guides (32) visually accompanying the fixed-light emitter (11) of the signalling module (1) and/or its fixed signalling lights (31).

6. Signalling system, according to claim 5, **characterized in that** there is a remote (M) for remote control of the intermittent-light points or guides (32) of the luminous indicator support (3); said remote being (M) associated with a remote control device integrated into the remote control (M) or connected to it, and equipped with two push-buttons (M1), (M2) that activate the respective left/right intermittent-light points or guides (32) at the user's will.

7. Signalling system, according to claim 1, **characterized in that** the signalling module (1) contains an intense light emitter (11') that activates autonomously; said intense light emitter being (11') integrated or adjacent to the fixed-light emitter (11).

8. Signalling system, according to claim 7, **characterized in that** the signalling module (1) has electronic components programmed to activate the intense light emitter (11') autonomously upon braking.

9. Signalling system, according to claim 1, **characterized in that** the signalling module (1) and the rapid anchoring (2) are integrated in a single piece.
